# EUROPÄISCHE PATENTSCHRIFT

(11) **EP 3 257 649 B1**
(45) Veröffentlichungstag und Bekanntmachung des Hinweises auf die Patenterteilung: **09.10.2019**
(21) Anmeldenummer: 17173344.7
(22) Anmeldetag: 30.05.2017
(51) Int. Cl.: B29C 45/14, B60K 37/02

(54) **VERFAHREN ZUR HERSTELLUNG EINER KUNSTSTOFFABDECKUNG MIT TRANSPARENTEM ANTEIL UND ANZEIGEABDECKUNG AUS KUNSTSTOFF**
METHOD FOR PRODUCING A PLASTIC COVER WITH TRANSPARENT SECTION AND DISPLAY COVER MADE FROM PLASTIC
PROCÉDÉ DE FABRICATION D'UN REVÊTEMENT EN PLASTIQUE COMPRENANT UNE PARTIE TRANSPARENTE ET RECOUVREMENT D'AFFICHAGE EN PLASTIQUE

(30) Priorität: 16.06.2016 DE 102016210816
(43) Veröffentlichungstag der Anmeldung: 20.12.2017
(73) Patentinhaber: Continental Automotive GmbH, 30165 Hannover (DE)
(72) Erfinder: HÖNI, Helmut, 78733 Aichhalden (DE)

(56) Entgegenhaltungen:
- WO-A1-2016/008790
- DE-A1-102008 023 499

## Beschreibung

Die Erfindung betrifft ein Verfahren zur Herstellung einer Kunststoffabdeckung mit transparentem Anteil und eine Anzeigeabdeckung aus Kunststoff, insbesondere eine Anzeigeabdeckung in einem Fahrzeug.

Die Verwendung von Abdeckungen und Blenden aus Kunststoff ist weit verbreitet. Für die Herstellung von Kunststoffabdeckungen mit transparentem Anteil, die beispielsweise als Anzeigeabdeckung verwendet werden, sind eine ganze Reihe verschiedener Herstellungsverfahren bekannt. Eine Gemeinsamkeit der verschiedenen bekannten Kunststoffabdeckungen kann darin bestehen, dass sie einen transparenten Bereich aufweisen, durch den ein Betrachter eine aus seiner Sicht dahinter liegenden Anzeige sehen und ablesen kann. Weiterhin haben viele dieser Kunststoffabdeckungen einen nicht transparenten Bereich, der beispielsweise den transparenten Bereich rahmenartig umgeben kann oder auch den Blick auf das Innere eines mit einer derartigen Abdeckung versehenen Geräts verdeckt.

Bei der Ausrüstung von Fahrzeugen sind besondere Anforderungen in Hinsicht auf mechanische Stabilität, Robustheit gegenüber Vibrationen, gute Sichteigenschaften, Beständigkeit gegenüber Umwelteinflüssen gestellt.

Im Nutzfahrzeugbereich können darüber hinaus auch Eigenschaften wie Schutz gegen das Eindringen von Staub, Schmutz, Feuchtigkeit oder Spritzwasser wünschenswert oder sogar vorgeschrieben sein.

Demgegenüber stehen wirtschaftliche Anforderungen wie beispielsweise die Fertigungsqualität oder Prozesssicherheit auch bei hohen Stückzahlen.

Im Stand der Technik bekannt sind Verfahren zur Herstellung von Kunststoffabdeckungen mit transparentem Anteil in einem Mehrkomponenten-Spritzguss-Verfahren, wie sie beispielsweise auch als Teil eines Gerätegehäuses für Anwendungen im Automobil- und Nutzfahrzeug-Bereich, wie etwa für Tachographen oder Mautgeräte, verwendet werden. Bei diesen Verfahren ist es jedoch werkzeugtechnisch bedingt, dass der transparente Anteil notwendigerweise gegenüber der übrigen Abdeckung räumlich zurückgesetzt ist, wodurch eine Kante oder ein Absatz in der Front, d. h. der einem Betrachter zugewandten Seite der Abdeckung, entsteht. Dadurch, dass der transparente Anteil räumlich zurückgesetzt ist, wird das Ablesen einer Anzeige durch den transparenten Anteil hindurch jedoch erschwert.

Überdies ist aus der WO 2016/008790 A1 ein Verfahren zur Herstellung eines Kunststoff-Fahrzeuganbauteils bekannt. Bei dem Verfahren wird eine polymere Folie, die einen opaken oder teilopaken Aufdruck aufweist, in ein Spritzgusswerkzeug eingelegt. Anschließend wird die polymere Folie mit einem optisch transparenten polymeren Deckteil hinterspritzt und ein polymeres Trägerteil zumindest auf einen Teil der Oberfläche des polymeren Deckteils, die von der polymeren Folie abgewandt ist, aufgespritzt.

Aufgabe der Erfindung ist daher, prozesssicher und in großer Stückzahl eine verbesserte Kunststoffabdeckung mit einem transparenten Anteil bei hoher Fertigungsqualität bereitzustellen.

Diese Aufgabe wird durch ein Verfahren zur Herstellung einer Kunststoffabdeckung mit transparentem Anteil gemäß Anspruch 1 und eine Anzeigeabdeckung aus Kunststoff gemäß Anspruch 11 gelöst. Ausgestaltungen und Weiterbildungen des Erfindungsgedankens sind Gegenstand von abhängigen Ansprüchen.

Es werden ein Verfahren zur Herstellung einer Kunststoffabdeckung mit transparentem Anteil und eine Anzeigeabdeckung aus Kunststoff mit einem transparenten ersten Bestandteil offenbart.

Das Verfahren zur Herstellung einer Kunststoffabdeckung mit transparentem Anteil in einem Mehrkomponenten-Spritzguss-Verfahren umfasst ein Aufbringen eines Aufdrucks auf zumindest einen Teilbereich einer transparenten Folie, ein Anspritzen einer ersten, transparenten Komponente an die Seite der Folie, auf die der Aufdruck aufgebracht ist, in einem Spritzgussverfahren, wobei der Verbund aus der Folie und der transparenten Komponente einen ersten Bestandteil der Kunststoffabdeckung ausbildet; weiterhin folgt ein Anspritzen einer zweiten Komponente an den ersten Bestandteil der Kunststoffabdeckung, wobei der Aufdruck auf der Folie visuell erkennbare Konstruktionsmittel und/oder das Sichtbild störende Produktionsspuren verdeckt.

Bei dem Verfahren zur Herstellung einer Kunststoffabdeckung mit transparentem Anteil liegt der Abschluss der Oberfläche der Abdeckung auf der dem Betrachter zugewandten Seite bündig in einer Ebene. Das bedeutet, dass die zweite Spritzgusskomponente der Kunststoffabdeckung bündig mit dem ersten Bestandteil der Kunststoffabdeckung in einer Ebene abschließt. Dabei schließt auf der dem Betrachter zugewandten Seite der erste Bestandteil der Kunststoffabdeckung mit der dem Betrachter zugewandten Oberfläche der Folie ab. In anderen Worten zeichnet sich diese besonders vorteilhafte Ausführungsform des Verfahrens zur Herstellung einer Kunststoffabdeckung mit transparentem Anteil dadurch aus, dass die zweite Spritzgusskomponente der Kunststoffabdeckung bündig mit dem ersten Bestandteil der Kunststoffabdeckung in einer Ebene mit der dem Betrachter zugewandten Oberfläche der Folie des ersten Bestandteils abschließt. Besonderer Vorteile dieser Ausführungsform können in einer einfacheren Reinigbarkeit und/oder in der Abwesenheit hervorstehender Ansatzstellen liegen.

Die Anzeigeabdeckung aus Kunststoff mit einem ersten Bestandteil mit transparentem Anteil, der den Anzeige-Sichtbereich der Anzeigeabdeckung ausbildet, und mit einem zweiten Bestandteil, der ein strukturelles Unterstützungsmittel ausbildet, wobei der zweite Bestandteil einen nicht-Sicht-Bereich der Anzeigeabdeckung im Wesentlichen bildet, wird dadurch gekennzeichnet, dass der erste Bestandteil eine transparente Folie auf der dem Betrachter zugewandten Seite und eine transparente, erste Spritzgusskomponente auf der dem Betrachter abgewandten Seite aufweist, und dass auf die Folie auf der dem Betrachter abgewandten Seite zumindest in Teilbereichen ein Aufdruck aufgebracht ist mit zumindest einer sichthemmenden Druckschicht, sodass visuell erkennbare Konstruktionsmittel und/oder das Sichtbild störende Produktionsspuren verdeckt werden, und dass diese transparente Folie mit der transparenten Spritzgusskomponente eine visuelle Einheit bildet. Überdies ist vorgesehen, dass eine an den ersten Bestandteil angespritzte zweite Spritzgusskomponente der Kunststoffabdeckung bündig mit dem ersten Bestandteil der Kunststoffabdeckung, in einer Ebene mit einer dem Betrachter zugewandten Oberfläche der Folie des ersten Bestandteils, abschließt.

Besondere Ausführungsformen sind Gegenstand der Unteransprüche.

Als Alternativen zu dem erfindungsgemäßen Verfahren könnten auch der transparenten Anteil und der übrigen Anteil einer Kunststoffabdeckung separat hergestellt und hernach durch Kleben, Ultraschallschweißen oder Laserschweißen, Maskenlaserschweißen, mechanisches Einrasten oder Verschrauben in Verbindung gebracht werden, wobei das erfindungsgemäße Verfahren Vorteile gegenüber diesen Alternativen bietet.

Ein Herstellungsverfahren mit Verkleben hat gegenüber der erfindungsgemäßen Lösung, die auf Spritzgießen beruht, den Nachteil, dass eine zusätzliche Handhabung der Teile und aufwändige Positionierung vor dem Verkleben notwendig wäre. Bei dem erfindungsgemäßen Verfahren hingegen fällt die zeitaufwändige und fehleranfällige zusätzliche Handhabung weg. Dadurch ist die Prozesssicherheit des erfindungsgemäßen Verfahrens deutlich besser, als mit einem Klebe-Verfahren zu erwarten wäre. Außerdem fallen bei dem erfindungsgemäßen Verfahren weitere Qualitätskontrollen zwischen den verschiedenen Verfahrensschritten (wie beispielsweise die separate Herstellung des transparenten und des nicht-transparenten Anteils sowie deren Positionierung und Verkleben) weg, welche bei einem auf Verkleben beruhenden Verfahren erforderlich wären. Ein weiterer Vorteil des erfindungsgemäßen Verfahrens gegenüber einer auf Verkleben setzenden Alternative ist eine geringere Ausschussquote. Weiterhin ist die für die Herstellung einer Kunststoffabdeckung erforderliche Zeitdauer bei dem erfindungsgemäßen Verfahren geringer als bei einem alternativen Herstellungsverfahren, das ein Verkleben beinhaltet: Bei dem erfindungsgemäßen Herstellungsverfahren entfällt die Wartezeit, die ein Kleber zum Aushärten benötigen würde. Demnach ist ein weiterer Vorteil des erfindungsgemäßen Herstellungsverfahrens darin zu sehen, dass gegenüber einem Kleben beinhaltenden Alternativverfahren höhere Stückzahlen pro Zeitintervall möglich sind. Eine erhöhte Stückzahl bedeutet wiederum eine verbesserte Wirtschaftlichkeit des erfindungsgemäßen Verfahrens. Das erfindungsgemäße Verfahren ermöglicht zudem besonders geringe Spaltmaße bis hin zur kompletten Abwesenheit von Spalten zwischen den verschiedenen Anteilen der Abdeckung, was mit einem auf Verkleben beruhenden Verfahren nicht gegeben wäre. Außerdem ermöglicht das erfindungsgemäße Verfahren, Kunststoffabdeckungen von höherer mechanischer Stabilität herzustellen, als mit einem alternativen Klebeverfahren erreicht würde.

Gegenüber einer alternativen Herstellungsmethode, bei der zur Verbindung von separat gefertigtem transparentem Anteil mit übriger Kunststoffabdeckung Ultraschallschweißen oder Laserschweißen eingesetzt würde, hat das erfindungsgemäße Herstellungsverfahren grundsätzlich die gleichen Vorteile, wenn man einmal davon absieht, dass auch beim Ultraschweißen der Zeitbedarf für das Aushärten wegfällt. Jedoch bietet das erfindungsgemäße Herstellungsverfahren den Vorteil gegenüber Verfahren, die Ultraschallschweißen oder Laserschweißen zur Verbindung einsetzen, dass es frei davon ist, bei der mechanischen Gestaltung zusätzlichen Platz für das Schweißen vorzusehen. Damit ermöglicht das erfindungsgemäße Verfahren im Vergleich zu den beiden genannten Schweißverfahren kompaktere Abmessungen bei höherer mechanischer Stabilität.

Eine alternative Herstellungsmethode, bei welcher die beiden Anteile der Kunststoffabdeckung mittels Maskenlaserschweißen verbunden werden, hätte zwar weder den Zeitnachteil des Verklebens noch die Platzanforderung der anderen beiden angesprochenen Schweißverfahren. Das erfindungsgemäße Herstellungsverfahren weist gegenüber einem auf Maskenlaserschweißen setzenden Verfahren jedoch den Vorteil auf, dass dabei geringe Spaltmaße bei gleichbleibender Qualität erhalten werden und zugleich eine sehr geringe Ausschussquote auftritt. Währenddessen treten im Maskenlaserschweißverfahren Spalte mit variierenden Maßen zwischen den zu verschweißenden Teilen auf und es gibt zudem erhöhten Ausschuss durch im Schweißverfahren entstandene matte Stellen auf dem transparenten Anteil.

Gegenüber alternativen Herstellungsverfahren, bei denen die separaten Anteile mechanisch durch Einrasten zur Verbindung gebracht werden, hat das erfindungsgemäße Herstellungsverfahren den Vorteil, dass die geschaffene Abdichtung eine erhöhte Dichtigkeit gegenüber eindringendem Schmutz, Staub, Feuchtigkeit, Spritzwasser sowie erhöhte mechanische Stabilität bietet. Überdies bietet das erfindungsgemäße Verfahren den weiteren Vorteil, dass zwischen den Schritten keine aufwändige Handhabung und kein Zusammensetzen erforderlich ist, wodurch auch erneut Qualitätskontrollen entfallen und Ausschussquoten gering gehalten werden können.

Weiterhin werden bei den bekannten derartigen Verfahren die Oberflächeneigenschaften des transparenten Anteils durch den Werkstoff des transparenten Anteils bestimmt. Somit kann die Oberflächeneigenschaft nicht unabhängig vom Gussverfahren bestimmt werden einerseits und die so geschaffene Oberfläche ist Mängeln, Makeln und generell der Prozesssicherheit des Spritzgießprozesses ausgesetzt. Weiterhin sind auf solchen Abdeckungen nach der Herstellung aufgedruckte Symbole den Umwelteinflüssen ausgesetzt und nicht besonders haltbar.

Eine nach dem erfindungsgemäßen Verfahren hergestellte Kunststoffabdeckung mit transparentem Anteil weist den Vorteil auf, dass bei einem derartigen Verfahren ein auf die Folie aufgebrachter Aufdruck vor Umwelteinflüssen geschützt ist. Ein auf diese Weise aufgebrachtes Symbol oder Logo wäre besonders beständig gegen alle Arten von Umwelteinflüssen, die neben Reinigungsvorgängen und Feuchtigkeit auch weitere Einflüsse wie beispielsweise mechanisches Kratzen oder Schaben beinhalten können.

Eine nach dem erfindungsgemäßen Verfahren hergestellte Kunststoffabdeckung mit transparentem Anteil weist außerdem vorteilhafterweise eine gesteigerte mechanische Stabilität auf.

Eine Herstellung von Kunststoffabdeckungen basierend auf dem erfindungsgemäßen Verfahren ist besonders prozesssicher und erfordert vorteilhafterweise besonders wenig Qualitätskontrolle, wodurch eine vorteilhaft geringe Ausschussquote erreicht wird.

Darüber hinaus ermöglicht eine Herstellung von Kunststoffabdeckungen basierend auf dem erfindungsgemäßen Verfahren die Fertigung einer vorteilhaft besonders hohen Stückzahl von Abdeckungen pro Zeitintervall, weil das Verfahren auf Prozessschritten mit vorteilhaft besonders geringem Zeitaufwand beruht.

Weiterhin ist eine Herstellung von Kunststoffabdeckungen basierend auf dem erfindungsgemäßen Verfahren darin besonders vorteilhaft, dass sie frei von zusätzlichen konstruktiven Anforderungen ist und somit eine besonders flexible Entwurfgestaltung ermöglicht.

Eine Herstellung basierend auf dem erfindungsgemäßen Verfahren ist zusätzlich darin besonders vorteilhaft, dass die hergestellten Kunststoffabdeckungen besonders geringe und besonders gleichmäßige Spaltmaße aufweisen.

Die Folie ist auf der Seite, die dem Betrachter zugewandt ist, nicht in Kontakt mit der transparenten Spritzguss-Komponente. Auf der dem Betrachter abgewandten Seite ist auf einem Teilbereich der Folie zumindest ein Aufdruck aufgebracht. Weiterhin ist an die dem Betrachter abgewandten Seite der Folie ein transparenter Spritzguss-Kunststoff-Werkstoff angespritzt.

Durch die Anordnung der Druckschicht zwischen der Folie und dem transparenten Spritzguss-Werkstoff ist die Druckschicht vor äußeren Einflüssen wie Kratzen, korrosiven Substanzen, Lösungsmitteln, Reinigungsmitteln geschützt. Nutzer, die eine Eingabe anhand von berührungsempfindlichen Anzeigen gewohnt sind, könnten aus der Gewohnheit heraus auch Anzeigen berühren, die nicht zur Berührungseingabe ausgerüstet sind. Anzeigen, welche nicht zur Berührungseingabe ausgerüstet sind, sind häufig auch nicht für Kontakt mit der menschlichen Haut geeignet, auf der sich im Normalzustand in Spuren von Schweiß auch aggressive Bestandteile befinden. Auch vor solchen Einflüssen wäre der Aufdruck geschützt. Für beispielsweise einen Einsatz in feuchteintensiven Bereichen, in Außenbereichen, in Baumaschinen und Landmaschinen, an Automatenkiosken kann ein solcher Schutz vor Einflüssen wünschenswert sein.

Insbesondere für den Einsatz in automobilen Nutzfahrzeugen sind die Anforderungen an Dichtigkeit und Unempfindlichkeit gegen Verunreinigungen, Schmutz, Dreck aber auch gegenüber Reinigungsmitteln und Lösungsmitteln, mit denen beispielsweise die Verunreinigungen entfernt werden sollen, hoch. Eine Anordnung mit der Druckschicht zwischen einer Folie und einem transparenten Spritzguss-Werkstoff erfüllt diese hohen Anforderungen auf besonders vorteilhafte Weise. Insbesondere bei Anwendungen im Bereich robuster Nutzfahrzeuge, wo beispielsweise Symbole im Aufdruck der Kunststoffabdeckung gegebenen falls zur Identifikation oder für Gefahrenhinweise entscheidend oder notwendig sind, sind besonders beständige Symbole wünschenswert, was durch den Einschluss zwischen Folie und transparenter Komponente ermöglicht wird.

Durch die Anordnung der Folie auf der dem Betrachter zugewandten Seite ermöglicht die Wahl des Folienmaterials darüber hinaus in besonders vorteilhafter Weise die Oberflächeneigenschaften unabhängig von den Eigenschaften des Drucks oder des transparenten Spritzguss-Werkstoffs zu wählen. In anderen Worten: Die Oberflächeneigenschaften des transparenten Anteils der Anzeigeabdeckung sind im erfindungsgemäßen Verfahren unabhängig von den Eigenschaften des körperbildenden transparenten Bestandteils wählbar. Dabei kann die Wahl beispielsweise auf besonders beständige Folienmaterialien fallen oder auf Folienmaterialien mit besonderen optischen Eigenschaften wie beispielsweise reduzierte Reflexivität.

Die Folie kann kratzfest sein. Dabei können, je nach Einsatzzweck, verschiedene Stufen von Kratzfestigkeit wünschenswert sein. Für manche Zwecke kann es bereits ein Vorteil sein, wenn die Härte der Folie so gewählt ist, dass menschliche Fingernägel darin keine Spuren hinterlassen können. Für weitere Einsatzzwecke kann es auch wünschenswert sein, dass ein metallischer Gegenstand keine Kratzer in der Oberfläche verursachen kann. Metallische Gegenstände könnten beispielsweise ein Reißverschluss, ein Druckknopf oder einer Bekleidungsniete sein.

Unter transparent versteht man, dass ein Betrachter durch den transparenten Teil der Abdeckung hindurch sehen und beispielsweise eine aus seiner Sicht hinter dem transparenten Anteil der Abdeckung angeordnete Anzeigeeinrichtung ablesen kann. In diesem Fall durchläuft Licht also den transparenten Anteil und wird dabei so wenig abgeschwächt und so wenig abgelenkt, dass das Bild dahinter ablesbar ist. Transparenz ist zu unterscheiden von Transluzenz, also von Durchscheinen, wobei zwar Licht durch einen Körper hindurch geht, im Strahlengang jedoch diffus wird und ein Ablesen nicht ermöglichen würde.

Unter opak versteht man, dass ein Stoff lichtundurchlässig ist. Mit anderen Worten: Ist ein Stoff opak, so ist er nicht transparent und nicht transluzent.

Beispielsweise kann die erfindungsgemäße Kunststoffabdeckung Teil eines Gehäuses sein. Beispielhaft könnte dieses Gehäuse das Gehäuse eines Gerätes sein. In einer beispielhaften Ausführung kann das Gerät mit dem Gehäuse mit der erfindungsgemäßen Kunststoffabdeckung zum Einbau in einem Kraftfahrzeug vorgesehen sein. Weiterhin weist ein beispielhaftes Gehäuse die Konformität für einen Einbau in einen genormten Einbauschacht auf. Das Gehäuse kann beispielsweise ein Gehäuse eines Tachographen oder eines Mautgeräts oder eines Taxameters sein.

Beispielhafterweise wird eine erfindungsgemäß hergestellte Kunststoffabdeckung als Blende oder Verkleidungsteil eingesetzt.

In einem weiteren beispielhaften Ausführungsbeispiel wird eine Anzeigeabdeckung gemäß dem unabhängigen Vorrichtungsanspruch als Displayabdeckung für ein Display in einem Automobil eingesetzt.

Auf der Innenseite des transparenten Anteils des Kunststoffobjektes, also auf der dem Betrachter abgewandten Seite der Kunststoffabdeckung, kann sich eine Anzeigeeinrichtung befinden, die von einem Betrachter durch den transparenten Teil der Kunststoffabdeckung hindurch sichtbar ist.

Ein Spritzguss-Werkstoff für den transparenten Anteil einer erfindungsgemäßen Anzeigeabdeckung könnte beispielsweise ein Werkstoff aus der Gruppe der Polycarbonat-Werkstoffe (PC) oder der Polymethylmethacrylat-Werkstoffe (PMMA) sein.

Ein Spritzguss-Werkstoff für den nicht transparenten Teil einer erfindungsgemäßen Anzeigeabdeckung könnte beispielsweise ein Werkstoff aus der Gruppe der Acrylnitril-Butadien-StyrolCopolymerisate (ABS) oder ein Polymer-Blend, beispielsweise PC+ABS oder PA+ABS, oder eine Polymer-Legierung sein.

Die oben genannten Spritzguss-Werkstoffe illustrieren beispielhafte Ausführungsbeispiele, ohne dadurch die erfindungsgemäßen Verfahren und Vorrichtungen darauf zu beschränken. Prinzipiell kommen alle geeigneten Kunststoff-Werkstoff-Kombinationen für die erfindungsgemäße Verwendung in Frage. Geeignete Werkstoff-Kombinationen zeichnen sich dadurch aus, dass zumindest einer der Spritzguss-Werkstoffe durchsichtig ist und dass die Werkstoffe untereinander zumindest paarweise die für bekannte Mehrkomponenten-Spritzgießverfahren ausreichende Haftung aufweisen.

Die Kunststofffolie, an die die transparente Komponente in einem Spritzgussverfahren angespritzt wird, kann mit einer Beschichtung versehen sein, welche beispielsweise metallisch sein kann, beispielsweise aufgebracht auf die Folie durch eine Deposition von Metalldampf. Die Beschichtung kann aber auch nichtmetallisch sein.

Der Aufdruck kann nicht-Kunststoff-Bestandteile enthalten, wie z. B. Lack.

Der Aufdruck kann im Randbereich, d. h. im äußeren Bereich des transparenten Anteils, in der Nähe der nicht transparenten Komponente, aufgedruckt sein. Dabei sind Ausführungsformen mit komplett geschlossenem, voll umlaufendem Rahmen möglich genauso wie teilweise umschließende, fragmentierte oder stückweise Rahmen.

Im Kontext der Erfindung ist unter dem mit Bezug auf Aufdrucke genannten Begriff Rahmen ein aufgedruckter Rahmen zu verstehen, also ein flächiger Teilbereich, der die Durchsicht hemmt und eine dekorative Funktion hat - es ist mit Bezug auf einen Aufdruck kein tragendes oder strukturbildendes Konstruktionselement gemeint.

Das Aufbringen von Aufdrucken ist nicht auf einen Aufdruck beschränkt, sondern es sind auch mehrere Aufdrucke oder ein Aufbringen eines Aufdrucks in mehreren Teilschritten denkbar sowie das Aufbringen von verschiedenen Aufdrucken, möglicherweise auch in verschiedenen Farben, auf eine Folie.

Der Bestandteil der Kunststoffabdeckung, der nicht den Anzeige-Sichtbereich der Abdeckung bildet, kann aus einem nicht transparenten Kunststoff-Werkstoff bestehen. Dabei kann ein beliebiger Kunststoff auch durch Einfärben zu einem nichtdurchsichtigen Kunststoff werden. Der nicht-Anzeige-Sicht-Bestandteil kann eine strukturelle Funktion haben, wie beispielsweise den teilweise transparenten Bestandteil zu tragen oder die Befestigungsmittel zur Anbringung der Anzeigeabdeckung an beispielsweise einem Gehäuse oder in beispielsweise einer größeren Abdeckung oder Blende. Dabei sind verschiedene Grade von nicht-Transparenz denkbar: Angefangen bei vollkommener Lichtundurchsichtigkeit bis hin zu einer schwachen Opazität oder einem Durchscheinen (Transluzenz). Durch abgestuften Einsatz verschiedener Grade der nicht-Transparenz sind beispielsweise dekorative Elemente wie ein von der dem Betrachter abgewandten Seite aus hinterleuchteter Leuchtrahmen, der im Nichtanzeige-Bereich liegt und den Anzeigebereich umgibt, möglich.

Als Folie kommt ein dünnes Blatt aus einem transparenten Material in Frage. Dünn heißt in diesem Zusammenhang, dass die Materialstärke um einen Faktor 10 oder mehr geringer ist, als die Abmessungen in den beiden anderen Dimensionen. Beispielsweise könnte eine transparente Kunststofffolie aus Polycarbonat bestehen und 0,05 bis 0,5 mm dick sein. Eine weitere Anforderung an eine Folie ist, dass der Schmelzpunkt hoch genug liegt, sodass die Folie beim Anspritzen der transparenten Spritzguss-Komponente nicht schmilzt, beispielsweise bei 220 °C. Weiterhin kann das Folienmaterial beispielsweise auch selbst bereits leicht eingefärbt oder getönt sein oder leicht mattiert sein oder auch klar und/oder farblos sein.

Zu Beginn des Verfahrens ist eine im Verfahren zu verwendende Folie komplett transparent. Auf zumindest der Seite der Folie, die in einer erfindungsgemäßen Anzeigeabdeckung dem Betrachter abgewandt ist, wird ein Aufdruck aufgebracht. Der auf die Folie aufgebrachte Aufdruck ist nicht komplett transparent, sondern stattdessen zumindest sichthemmend. Somit ist der Bereich der Folie, der mit dem Aufdruck versehen wurde, dann nicht mehr transparent. Danach wird ein transparenter Spritzguss-Kunststoff-Werkstoff, welcher auch für ein Mehrkomponenten-Spritzguss-Verfahren geeignet ist, an die dem Betrachter abgewandten Seite der Folie angespritzt. Die dabei verwendete Spritzguss-Komponente ist transparent, kann aber auch leicht getönt oder eingefärbt sein, solange ein Betrachter weiterhin hindurch eine Anzeige ablesen könnte. Die Folie bildet zusammen mit der transparenten Spritzgusskomponente einen ersten Anteil der Anzeigeabdeckung. Dieser erste Anteil ist zumindest teilweise transparent. Der transparente Bereich der Anzeigeabdeckung ist dort, wo die Sicht nicht durch den zuvor auf die Folie aufgebrachten Aufdruck gehemmt wird. In anderen Worten: In dem Bereich, wo kein Aufdruck auf der Folie ist, ist der erste Anteil der Anzeigeabdeckung transparent. Somit ist der erste Anteil der Anzeigeabdeckung teilweise transparent, während die Folie an sich und die erste Spritzgusskomponente zu Beginn des Herstellungsverfahrens in ihrer gesamten Ausdehnung transparent waren.

Der Aufdruck wird zwischen Folie und transparenter Spritzgusskomponente eingeschlossen und vor Umwelteinflüssen geschützt.

In dem Bereich eines mittels Mehrkomponenten-Spritzguss-Verfahrens hergestellten Werkstücks, in dem eine Komponente an eine weitere Komponente angespritzt wird, indem also zwei Komponenten direkten physischen Kontakt haben, kann man von einem Anspritzbereich sprechen. In diesem Anspritzbereich kann es in den bekannten Verfahren dazu kommen, dass sich Inhomogenitäten, wie beispielsweise Anspritz- oder Abdicht-Kanten sowie Abdruck-Stellen, in einer äußeren Oberfläche bilden, die den ästhetischen Eindruck stören können, insbesondere in der Wahrnehmung eines nicht mit den Subtilitäten des Herstellungsprozesses vertrauten Betrachters. Weiterhin könnten im Anspritzbereich ohne Abdeckung in einer transparenten Spritzgusskomponente Konstruktionselemente oder werkzeugtechnische Elemente wie stiftförmig oder nutförmig ausgebildete Verbindungsmittel oder Fixierelemente oder Befestigungsmittel oder Abdrücke eines Auswerfers der Mehrkomponenten-Spritzguss-Maschine sichtbar sein. Neben den genannten potentiellen ästhetischen Störungen können die angesprochenen Inhomogenitäten im transparenten Bereich einer Anzeigeabdeckung auch die Ablesbarkeit einer Anzeige stören oder die visuelle Wahrnehmung eines Betrachters negativ beeinflussen, indem beispielsweise in den Inhomogenitäten aus der Umgebung einfallendes Licht oder auch Licht zur Beleuchtung einer Anzeige ungünstig gestreut, gebündelt, reflektiert oder gebeugt werden könnte. Durch das Aufbringen eines nicht-transparenten Aufdrucks auf die Folie können bestimmte Bereiche der Anzeigeabdeckung verdeckt werden. Damit können die genannten Störungen abgemildert oder behoben werden.

Unter einer Spritzgusskomponente kann man einen Werkstoff, der zum Spritzgießen in einem Herstellungsverfahren zum Einsatz kommt, oder auch ein Teil verstehen, dass durch Spritzgießen einer Komponente entstanden ist.

In manchen Anwendungsgebieten können besondere Schutzklassen zum Anforderungsprofil an Geräte gehören, wie beispielsweise für Staub- und Spritzwasserschutz. Beispielsweise könnte eine Erfüllung der Schutzklasse IP54 im automobilen Bereich erforderlich sein.

Die besonderen Vorteile, die sich daraus ergeben, dass eine mit einem erfindungsgemäßen Verfahren hergestellte Kunststoffabdeckung so geartet sein kann, dass die gesamte, dem Betrachter entgegen gerichtete, somit frontale, Oberfläche bündig in einer Ebene abschließt (sowohl im transparenten Anteil als auch im nicht-transparenten Anteil) sind nicht nur ästhetische Vorteile, sondern auch in Sachen Robustheit und besserer Reinigbarkeit ergeben sich Vorteile. Außerdem kann eine solche Gestaltung die Ablesbarkeit einer Anzeige verbessern, den Eindruck von Wertigkeit der Abdeckung erhöhen und eine Anzeige größer erscheinen lassen.

Unter einem nicht-Sicht-Bereich beispielsweise einer Anzeigeabdeckung versteht man einen Bereich einer Anzeigeabdeckung, hindurch den man nicht auf die Anzeige sieht. Diese Bereiche sind strikt zu unterscheiden von einem Sichtbereich einer Anzeigeabdeckung, also einem Bereich, durch den hindurch eine Anzeige von einem Betrachter gesehen und abgelesen werden kann. Eine Anzeigeabdeckung kann mehrere Sicht-Bereiche und/oder auch mehrere nicht-Sicht-Bereiche aufweisen. Beispielsweise kann ein nicht-Sicht-Bereich dadurch entstehen, dass ein Aufdruck einen Teilbereich eines transparenten Anteils aufgebracht wird. Ein anderer nicht-Sicht-Bereich kann beispielsweise durch die Verwendung eines opaken Spritzguss-werkstoffs entstehen.

Unter visueller Einheit versteht man, dass eine Gruppe von Einzelteilen so zu einem Gebilde zusammengefügt ist, dass das Gebilde von einem Betrachter beim Anschauen als ein einheitlicher Gegenstand wahrgenommen wird. Im Fall eines transparenten Gebildes könnten also zwei oder mehr transparente Einzelteile, beispielsweise eine transparente Folie und ein transparenter Kunststoffkörper, so zusammengefügt sein, dass der Verbund von Folie und Körper von einem Betrachter als ein einzelner, einheitlicher, transparenter Gegenstand wahrgenommen wird.

Ein Verfahren zur Herstellung einer Kunststoffabdeckung mit transparentem Anteil kann auch drei oder mehr Spritzguss-Verfahrens-Schritte mit drei oder mehr Spritzguss-WerkstoffKomponenten aufweisen. Als dritte Komponente könnte beispielsweise auch ein weiteres Material zum Einsatz kommen, welches beispielsweise als Dichtmittel verwendet werden kann. Ein solches Material kann beispielsweise ein Elastomer, insbesondere ein Thermoplastischer Elastomer (TPE), sein. Aus der Gruppe der Thermoplastischen Elastomere könnte beispielsweise ein Styrol-TPE wie beispielsweise TPS-SEPS verwendet werden.

Eine nach dem erfindungsgemäßen Verfahren hergestellte Kunststoffabdeckung kann beispielsweise als Anzeigeabdeckung eines Gerätes, mit dem Kraftfahrzeuge ausgerüstet werden, zum Einsatz kommen. Solche Geräte könnten einerseits zum Einbau in Einbauschächten, beispielsweise in der Mittelkonsole eines Fahrzeugs oder in der Nähe des Fahrzeugdaches, vorgesehen sein. Solche Einbauschächte könnten beispielsweise auch Gegenstand von Normungsvorschriften sein. Eine erfindungsgemäße Kunststoffabdeckung könnte beispielsweise auf der dem Betrachter zugewandten Seite eines Gehäuses angebracht sein. Im Fall eines Gerätes für einen Einbauschacht wäre das die Seite, die aus dem Schacht herausragt. Eine erfindungsgemäße Abdeckung könnte beispielsweise auch andererseits an einem freistehenden Gerät zum Einsatz kommen. Dabei kommen alle Seiten in Frage. Freistehende Geräte können beispielsweise Geräte zur Nachrüstung in Fahrzeugen sein aber auch Geräte zum tragbaren Einsatz, zum ortsgebundenen Einsatz in Gebäuden wie beispielsweise Bürogeräte, Arbeitsgeräte oder Werkmaschinen. Außerdem könnte eine erfindungsgemäße Kunststoffabdeckung mit transparentem Anteil auch beispielsweise an IT-Geräten oder an automatischen Kiosken wie beispielsweise Fahrkartenautomaten zur Verwendung kommen.

Eine erfindungsgemäße Kunststoffabdeckung mit transparentem Anteil könnte auch beispielsweise als Teil einer größeren Abdeckung zum Einsatz kommen, etwa als Bestandteil einer Abdeckung oder Oberfläche, die beispielsweise den Bereich mehrerer Einbauschächte oder über einen Einbauschacht hinausreichend oder den Bereich der gesamten Mittekonsole (Center Stack) überspannen. Allgemein gesagt könnte eine erfindungsgemäße Kunststoffabdeckung mit transparentem Anteil beispielsweise als Bestandteil der abschließenden Oberfläche eines Cockpits in einem Transportfahrzeug wie einem Straßenfahrzeug, einem Schienenfahrzeug, einem Wasserfahrzeug, in einem Unterwasserfahrzeug, in einem Luftfahrzeug oder in einem Raumfahrzeug eingesetzt werden. Auch eine Verwendung in anderen Fahrzeugen wie beispielsweise in Nutzfahrzeugen, in Landwirtschaftsmaschinen, in Minenfahrzeugen oder in Offroad-Fahrzeugen ist möglich.

Eine erfindungsgemäße Kunststoffabdeckung mit transparentem Anteil könnte auch beispielsweise mehrfach an einem Gerät zum Einsatz kommen, wenn das beispielhafte Gerät beispielsweise mehrere Anzeigen aufweist. Es ist aber auch beispielsweise denkbar, dass eine Ausführungsform einer erfindungsgemäßen Kunststoffabdeckung mit transparentem Anteil mehrere transparente Anteile aufweist, welche wiederum beispielsweise als Abdeckung mit Sichtfenstern zu Anzeigen besonderen Nutzen entfalten.

Beispielhaft könnte aber eine erfindungsgemäße Kunststoffabdeckung mit transparentem Anteil auch so eingesetzt werden, dass sich aus der Sicht des Betrachters hinter dem transparenten Anteil keine Anzeige im engeren Sinn befindet, sondern möglicherweise ist es beispielsweise wünschenswert, ein Beobachtungsfenster in das Innere einer Apparatur bereitzustellen, durch welches beispielsweise die Gegebenheiten im Inneren des Geräts beobachtet und beispielsweise für Rückschlüsse auf den Betriebszustand, einen Vorratsstand (etwa in einem Verkaufsautomaten oder an einem 3d-Drucker) oder Fehlerursachen erlaubt werden. Darüber hinaus kann es beispielsweise auch wünschenswert sein, eine erfindungsgemäße Kunststoffabdeckung mit transparentem Anteil zu dekorativen oder ästhetischen Zwecken einzusetzen. In diesem beispielhaften Fall wäre es auch denkbar, dass in dem vom transparenten Anteil der Kunststoffabdeckung abgedeckten Bereich weder eine Anzeige noch ein Einblick in das Innere eines Gerätes, sondern stattdessen vielleicht ein weiteres dekoratives Element oder etwas strukturell oder funktional unbedeutendes befindet. Weiterhin könnte eine erfindungsgemäße Kunststoffabdeckung mit transparentem Anteil auch beispielsweise über einer Lichtquelle angeordnet sein oder zu Beleuchtungszwecken verwendet werden. Eine Lichtquelle könnte beispielsweise auch ein Projektionsmittel sein, welches ein statisches oder dynamisches Lichtbild, welches zweidimensional oder dreidimensional-holographisch geartet sein kann, durch eine erfindungsgemäße Abdeckung hindurch projiziert.

In einer besonderen Ausführungsform eines erfindungsgemäßen Herstellungsverfahrens kann die Folie in Form gebracht werden, bevor die erste, transparente Komponente an die Folie angespritzt wird. Das kann beispielsweise durch Zuschneiden, Ausstanzen oder andere Verfahren erfolgen. Das Zuschneiden kann beispielsweise mittels Laser erfolgen. Besondere Vorteile liegen hierbei darin, dass die Folie besonders akkurate Abmessungen hat, dass aus einem großen Halbzeug-Werkzeug, d. h. beispielsweise einem großen Folien-Rohling, eine große Anzahl von in Form gebrachten Folien in vergleichsweise kurzer Bearbeitungszeit zur Weiterverarbeitung bereitgestellt werden kann oder dass die Folienränder besonders definierte Abschlusskanten und Kantenformen aufweisen kann.

In einer besonders vorteilhaften Ausführungsform des erfindungsgemäßen Herstellungsverfahrens ist der Kunststoff-Werkstoff der zweiten Spritzguss-Komponente opak. Vorteilhafterweise ermöglicht ein solcher Werkstoff, einerseits Streulicht, beispielsweise von hinter der Abdeckung, zu unterdrücken und andererseits kann beispielhaft der Einblick in ein mit einer Abdeckung versehenes Gehäuse verwehrt werden. Insbesondere im Kontext von Manipulationssicherheit, wie sie bei On-Board-Units von Mautgeräten aber auch von Fahrtenschreibern und Tachographen sowie bei Taxametern gefordert sein kann, kann es wünschenswert sein, den mechanischen Aufbau oder den inneren Aufbau eines Gerätes nicht preiszugeben.

In einer besonders vorteilhaften Variante eines erfindungsgemäßen Verfahrens zur Herstellung einer Kunststoffabdeckung mit transparentem Anteil erfolgt das Spritzgießen der verschiedenen Komponenten in umgekehrter Reihenfolge: Es erfolgt also zuerst das Spritzgießen der zweiten Komponente und danach das Spritzgießen der ersten, transparenten Komponente. Diese besondere Ausführungsform kann beispielsweise besonders vorteilhaft sein, wenn dadurch beispielsweise das Herstellungsverfahren besser auf die Schmelzpunkte der verschiedenen Spritzguss-Komponenten angepasst werden kann oder wenn beispielsweise eine wünschenswerte Konstruktion hergestellt werden kann.

In einer bestimmten Ausführungsform des Verfahrens zur erfindungsgemäßen Herstellung einer Kunststoffabdeckung mit transparentem Anteil erfolgt das Spritzgießen der verschiedenen Komponenten gleichzeitig oder zeitlich überlappend. Ein zeitliches Überlappen der Verfahrensschritte schließt hierbei auch die Möglichkeit ein, dass die Dauer der Spritzvorgänge der verschiedenen Komponenten unterschiedlich lang ist. Ein zeitliches Überlappen schließt aber auch Fälle ein, bei denen die Spritzvorgänge zu unterschiedlichen Zeitpunkten beginnen oder enden und nur teilweise gleichzeitig ablaufen. Besondere Vorteile von einem Herstellungsverfahren, bei dem das Spritzgießen der verschiedenen Spritzgusskomponenten gleichzeitig oder zeitlich überlappend erfolgt, liegen darin, dass höhere Herstellungstaktraten erreicht oder höhere Stückzahlen pro Zeit hergestellt werden können.

In einem besonders vorteilhaften Ausführungsbeispiel des erfindungsgemäßen Herstellungs-Verfahrens erfolgt der Aufdruck in einem oder mehreren Randbereichen der Folie oder rahmenartig im Randbereich der Folie. Dabei kann es vorteilhaft sein, dass der beispielsweise rahmenartige Aufdruck den Ablese-Sicht-Bereich der Anzeigeabdeckung so begrenzt, dass er die Ablesbarkeit der Anzeige verbessert, indem er beispielsweise unterstützend vermittelt, wo sich die Anzeige befindet beziehungsweise wo sie sich nicht befindet.

In einem besonders vorteilhaften Ausführungsbeispiel des erfindungsgemäßen Herstellungsverfahrens erfolgt das Aufbringen des Aufdrucks auf die Folie in einem Siebdruckverfahren. Dabei können besondere Vorteile in der Möglichkeit, besonders fein die Schichtdicke des Aufdrucks zu variieren, liegen. Andererseits werden dadurch beispielsweise besonders farbstarke oder kontrastreiche oder sichtbar intensive Aufdrucke ermöglicht.

In einem besonders vorteilhaften Ausführungsbeispiel des erfindungsgemäßen Herstellungsverfahrens erfolgt der Aufdruck auf die Folie in einer oder mehreren Graustufen. Dabei können Aufdrucke aus Graustufen vorteilhafterweise besonders ökonomisch hergestellt werden, weil durch das graduell in der Intensität variierte Aufbringen einer Aufdruck-Farbe unterschiedliche Intensitätsergebnisse erreicht werden.

In einem weiteren besonders vorteilhaften Ausführungsbeispiel des erfindungsgemäßen Herstellungsverfahrens erfolgt der Aufdruck auf die Folie mehrfarbig und/oder umfasst farbig abgesetzte Bereiche. Ein farbig abgestimmter Aufdruck kann besonders vorteilhaft in Korrespondenz mit dem Angezeigten die Ablesbarkeit einer Anzeige hinter einer Kunststoffabdeckung mit transparentem Anteil verbessern. Dabei sind verschiedene Kombinationen von Eigenschaften möglich. Beispielsweise kann die Oberfläche der dem Betrachter zugewandten Seite der Folie zugleich matt und entspiegelt sein. Beispielsweise kann die Mattheit der Oberfläche durch eine Mattierung erreicht werden. Die Oberfläche kann aber beispielsweise auch zugleich matt und verspiegelt sein. Besonders vorteilhaft können die Eigenschaften der Oberfläche die Sicht-Eigenschaften einer Kunststoffabdeckung mit transparentem Anteil verbessern, wodurch beispielsweise eine aus der Sicht eines Betrachters hinter der Abdeckung befindliche Anzeige besser abzulesen sein kann.

In einem besonders vorteilhaften Ausführungsbeispiel weist die Folie der Kunststoffabdeckung mit transparentem Anteil auf der dem Betrachter zugewandten Seite oder der dem Betrachter abgewandten Seite oder auf beiden Seiten, insbesondere aber auf der dem Betrachter zugewandten Seite, eine Beschichtung auf. Mittels einer Beschichtung können die Oberflächen-Eigenschaften der Folie in besonders vorteilhafter Weise verändert werden. So kann beispielsweise eine Beschichtung aufgebracht werden, die ungewollte Lichtreflexionen mindert, unterdrückt oder abschwächt. In einer anderen beispielhaften Ausführungsform kann durch eine Beschichtung die Ritzhärte oder die Kratzfestigkeit einer Folie erhöht werden.

In einem weiteren besonders vorteilhaften Ausführungsbeispiel eines Verfahrens zur Herstellung einer Kunststoffabdeckung mit einem transparenten Anteil wird eine einstückige Kunststoffabdeckung hergestellt. Einstückig bedeutet in diesem Zusammenhang, dass die verschiedenen Bestandteile der Kunststoffabdeckung einen festen Verbund, eine aus physisch-mechanischer Sicht eine Einheit bilden. Besondere Vorteile einer einstückigen Kunststoffabdeckung liegen beispielsweise in einer höheren Stabilität und mechanischen Robustheit. Darüber hinaus können einstückige Kunststoffabdeckungen auch besonders vorteilhaft unempfindlich gegenüber Vibrationen sein oder sich besonders vorteilhaft auf das Vibrationsverhalten der Abdeckung oder des Gerätes, an dem sie sich befindet, auswirken, beispielsweise vibrationsdämpfend.

In einer besonders vorteilhaften Ausführungsform umfasst der Aufdruck auf der Folie einer Kunststoffabdeckung mit transparentem Anteil auch ein Logo oder Symbol. Dieses Logo oder Symbol kann auch als Negativ realisiert sein, d. h. der Aufdruck wird dann in Form eines Logos oder Symbols gerade nicht aufgebracht. Ein Vorteil von einem ein Logo oder Symbol aufweisenden Aufdruck liegt darin, dass das Logo oder Symbol zwischen Folie und transparenter Spritzgusskomponente liegt und somit vor schädlichen Umwelteinflüssen geschützt ist. Ein weiterer Vorteil liegt darin, dass ein separater Verfahrens- oder Fertigungsschritt, in dem ein Logo oder Symbol aufgebracht wird, entfallen kann, was besonders wirtschaftlich ist.

In einem speziellen Ausführungsbeispiel wird eine erfindungsgemäße Anzeigeabdeckung als Bestandteil eines Fahrzeugeinbaugeräts, insbesondere eines Tachographen, verwendet. Dabei kann beispielsweise ein Gerätegehäuse mit einer erfindungsgemäßen Anzeigeabdeckung zum Einsatz kommen. In diesem Kontext ist eine erfindungsgemäße Anzeigeabdeckung besonders vorteilhaft durch die Robustheit gegenüber Umgebungseinflüssen und dadurch, dass sie leicht zu reinigen ist sowie dadurch, dass die Gestaltung einer erfindungsgemäßen Abdeckung durch den transparenten Anteil hindurch besonders gut das Ablesen einer Anzeige ermöglicht.

Eine Anzeigeabdeckung, wie sie die Ansprüche 12 und 13 zum Gegenstand haben, kann insbesondere mittels eines Verfahrens zur Herstellung einer Kunststoffabdeckung mit transparentem Anteil gemäß einem der Ansprüche 1 bis 11 hergestellt werden.

Die Erfindung wird nachfolgend anhand der Figuren der Zeichnung näher erläutert, wobei gleiche oder ähnliche Elemente mit denselben Bezugszeichen versehen sind. Es zeigt:
- Figur 1: in einer isometrischen Darstellung eine Kunststoffabdeckung mit transparentem Anteil,
- Figur 2: in einer Schnittzeichnung die Kunststoffabdeckung mit transparentem Anteil nach Figur 1.

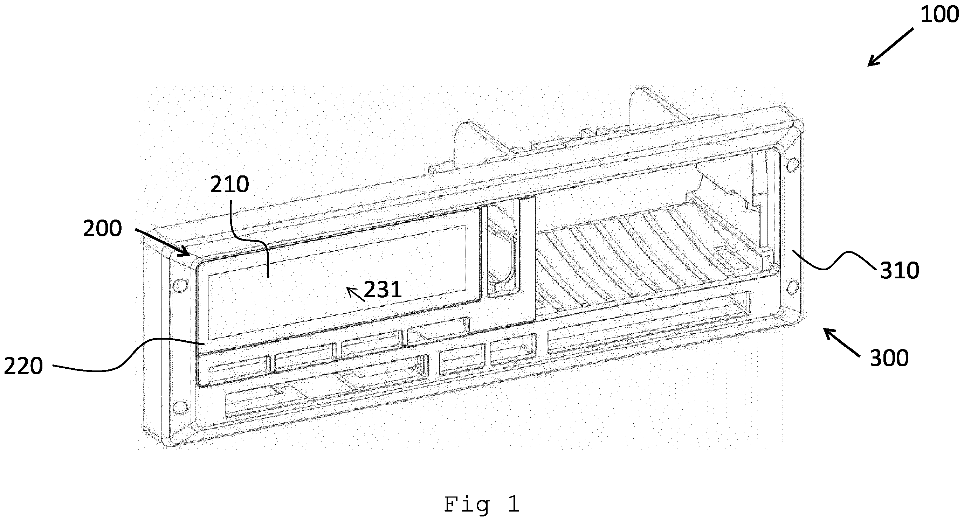

Figur 1 zeigt in einer isometrischen Darstellung eine beispielhafte Ausführung einer Kunststoffabdeckung 100 mit transparentem Anteil 210. Eine Folie mit einem Aufdruck 220 bildet zusammen mit einer transparenten Spritzguss-Komponente den ersten Bestandteil 200 der Kunststoffabdeckung 100. Ferner weist der erste Bestandteil 200 einen Sicht-Bereich 210 auf, in dem kein Aufdruck aufgebracht ist. Weiterhin weist die Kunststoffabdeckung 100 einen zweiten Bestandteil 300 auf.

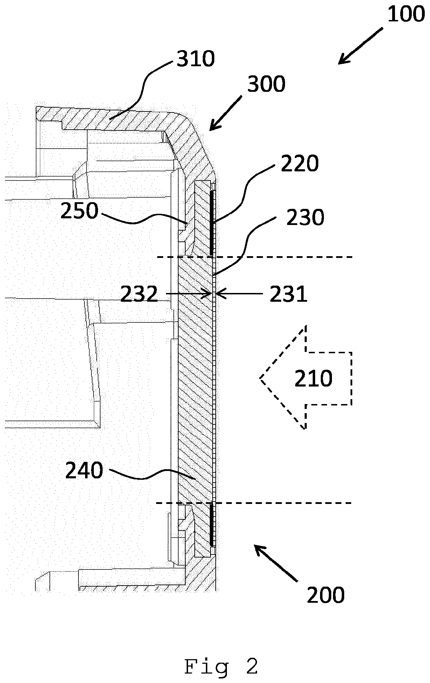

Figur 2 zeigt eine Kunststoffabdeckung 100 mit transparentem Anteil 210 in einer Schnittzeichnung. Die Kunststoffabdeckung weist einen ersten Bestandteil 200 und einen zweiten Bestandteil 300 auf. Eine Folie 230 bildet zusammen mit einer transparenten Spritzguss-Komponente 240 den ersten Bestandteil. Auf der Folie 230 befindet sich ein Aufdruck 220, welcher Konstruktionsmittel 250 verdeckt. Im Sicht-Bereich 210 des ersten Bestandteils 200 ist kein Aufdruck aufgebracht.

In einem Mehrkomponenten-Spritzguss-Verfahren zur Herstellung einer Kunststoffabdeckung 100 mit transparentem Anteil 210 erfolgt zunächst das Aufbringen eines Aufdrucks 220 auf zumindest einen Teilbereich einer transparenten Folie 230. An die Seite der Folie, auf der der Aufdruck 220 aufgebracht ist, wird eine erste, transparente Komponente 240 angespritzt. Der Verbund aus der Folie 230 und der transparenten Komponente 240 bildet einen ersten Bestandteil 200 der Kunststoffabdeckung 100 aus. Danach wird eine zweite Komponente 310 an den ersten Bestandteil 200 der Kunststoffabdeckung 100 angespritzt. Der Aufdruck 220 auf der Folie 230 verdeckt visuell erkennbare Konstruktionsmittel 250 und/oder das Sichtbild störende Produktionsspuren.

In einer Variante des Herstellungsverfahrens kann die mit einem Aufdruck 220 versehen Folie 230 in Form gebracht werden, bevor die erste, transparente Komponente 240 an die Folie 230 angespritzt wird.

In einer weiteren Variante des Herstellungsverfahrens kann die zweite Spritzgusskomponente 310 der Kunststoffabdeckung 100 bündig mit dem ersten Bestandteil 200 der Kunststoffabdeckung 100, in einer Ebene mit der dem Betrachter zugewandten Oberfläche 231 der Folie 230 des ersten Bestandteils 200, zum Abschluss gebracht werden.

In einer Variante des Herstellungsverfahrens kann der Kunststoff-Werkstoff der zweiten Spritzguss-Komponente 310 opak sein.

In einer alternativen Variante des Herstellungsverfahrens kann zuerst das Spritzgießen der zweiten Komponente 310 und danach das Spritzgießen der ersten Komponente 240 erfolgen.

In Varianten des Herstellungsverfahrens kann das Spritzgießen der verschiedenen Komponenten gleichzeitig oder zeitlich überlappend erfolgen.

Es sind Varianten des Herstellungsverfahrens möglich, in denen ein Aufdruck 220 in einem oder mehreren Randbereichen der Folie 230 oder rahmenartig im Randbereich der Folie 230 erfolgt.

In einer Variante des Herstellungsverfahrens kann ein Aufdruck 220 in einem Siebdruckverfahren auf die Folie 230 aufgebracht werden.

In einer hier nicht gezeigten Variante des Herstellungsverfahrens kann der Aufdruck 220 mehrfarbig erfolgen und/oder farbig abgesetzte Bereiche umfassen.

In einer Variante des Herstellungsverfahrens weist die dem Betrachter zugewandte Seite 231 der Folie 230 eine matte oder glänzende und/oder entspiegelte Oberfläche auf.

In einer Variante des Herstellungsverfahrens weist die Folie 230 auf der dem Betrachter zugewandten Seite 231 oder der dem Betrachter abgewandten Seite 232 oder auf beiden Seiten, insbesondere aber auf der dem Betrachter zugewandten Seite 231, eine Beschichtung auf.

Bei einer Anzeigeabdeckung aus Kunststoff mit einem ersten Bestandteil 200 mit transparentem Anteil 210, der den Anzeige Sichtbereich der Anzeigeabdeckung ausbildet, und mit einem zweiten Bestandteil 300, bildet dieser zweite Bestandteil 300 einen nicht-Sicht-Bereich der Anzeigeabdeckung. Dabei weist der erste Bestandteil 200 auf seiner dem Betrachter zugewandten Seite eine transparente Folie 230 auf und auf seiner dem Betrachter abgewandten Seite eine erste, transparente Spritzgusskomponente 240 auf. Auf die Folie 230 ist auf ihre dem Betrachter abgewandten Seite 232 zumindest in Teilbereich ein Aufdruck 220 mit zumindest einer sichthemmenden Druckschicht aufgebracht, sodass visuell erkennbare Konstruktionsmittel 250 und/oder das Sichtbild störende Produktionsspuren verdeckt werden. Diese Transparente Folie 230 bildet mit der transparenten Spritzguss-Komponente 240 eine visuelle Einheit.

Eine Variante einer Anzeigeabdeckung aus Kunststoff kann ein Teil eines Fahrzeugeinbaugeräts, insbesondere eines Tachographen, sein.

## Patentansprüche

1. Verfahren zur Herstellung einer Kunststoffabdeckung (100) mit transparentem Anteil (210) in einem Mehrkomponenten-Spritzguss-Verfahren, mit den Schritten:
- Aufbringen eines Aufdrucks (220) auf zumindest einen Teilbereich einer transparenten Folie (230); und
- Anspritzen einer ersten, transparenten Komponente (240) an die Seite der Folie (230), auf die der Aufdruck (220) aufgebracht ist, in einem Spritzgussverfahren, wobei der Verbund aus der Folie (230) und der transparenten Komponente (240) einen ersten Bestandteil (200) der Kunststoffabdeckung (100) ausbildet,
**gekennzeichnet, durch**
Anspritzen einer zweiten Komponente (310) an den ersten Bestandteil (200) der Kunststoffabdeckung (100), wobei der Aufdruck (220) auf der Folie (230) visuell erkennbare Konstruktionsmittel (250) und/oder das Sichtbild störende Produktionsspuren verdeckt und wobei die zweite Spritzgusskomponente (310) der Kunststoffabdeckung (100) bündig mit dem ersten Bestandteil (200) der Kunststoffabdeckung (100), in einer Ebene mit einer dem Betrachter zugewandten Oberfläche (231) der Folie (230) des ersten Bestandteils (200), abschließt.

2. Verfahren nach Anspruch 1, wobei die mit einem Aufdruck (220) versehene Folie (230) in Form gebracht wird, bevor die erste, transparente Komponente (240) an die Folie (230) angespritzt wird.

3. Verfahren nach einem der vorherigen Ansprüche, wobei der Kunststoff-Werkstoff der zweiten Spritzguss-Komponente (310) opak ist.

4. Verfahren nach einem der vorherigen Ansprüche, wobei das Spritzgießen der verschiedenen Komponenten in der umgekehrten Reihenfolge, also zuerst das Spritzgießen der zweiten Komponente (310) und danach das Spritzgießen der ersten Komponente (240), erfolgt.

5. Verfahren nach einem der vorherigen Ansprüche, wobei das Spritzgießen der verschiedenen Komponenten gleichzeitig oder zeitlich überlappend erfolgt.

6. Verfahren nach einem der vorherigen Ansprüche, wobei der Aufdruck (220) in einem oder mehreren Randbereichen der Folie (230) oder rahmenartig im Randbereich der Folie (230) erfolgt.

7. Verfahren nach einem der vorherigen Ansprüche, wobei das Aufbringen des Aufdrucks (220) auf die Folie (230) in einem Siebdruckverfahren erfolgt.

8. Verfahren nach einem der vorherigen Ansprüche, wobei der Aufdruck (220) mehrfarbig erfolgt und/oder farbig abgesetzte Bereiche umfasst.

9. Verfahren nach einem der vorherigen Ansprüche, wobei die dem Betrachter zugewandte Seite (231) der Folie (230) eine matte oder glänzende und/oder entspiegelte Oberfläche aufweist.

10. Verfahren nach einem der vorherigen Ansprüche, wobei die Folie (230) auf der dem Betrachter zugewandten Seite (231) oder der dem Betrachter abgewandten Seite (232) oder auf beiden Seiten, insbesondere aber auf der dem Betrachter zugewandten Seite (231), eine Beschichtung aufweist.

11. Anzeigeabdeckung aus Kunststoff mit einem ersten Bestandteil (200) mit transparentem Anteil (210), der den Anzeige-Sichtbereich der Anzeigeabdeckung ausbildet, wobei der erste Bestandteil (200) eine transparente Folie (230) auf der dem Betrachter zugewandten Seite und eine transparente, erste Spritzgusskomponente (240) auf der dem Betrachter abgewandten Seite aufweist, und wobei auf die Folie (230) auf der dem Betrachter abgewandten Seite (232) zumindest in Teilbereichen ein Aufdruck (220) aufgebracht ist mit zumindest einer sichthemmenden Druckschicht, sodass visuell erkennbare Konstruktionsmittel (250) und/oder das Sichtbild störende Produktionsspuren verdeckt werden, und dass diese transparente Folie (230) mit der transparenten Spritzgusskomponente (240) eine visuelle Einheit bildet, und mit einem zweiten Bestandteil (300), der ein strukturelles Unterstützungsmittel ausbildet, wobei der zweite Bestandteil (300) einen nicht-Sicht-Bereich der Anzeigeabdeckung bildet, wobei eine an den ersten Bestandteil (200) angespritzte zweite Spritzgusskomponente (310) der Kunststoffabdeckung (100) bündig mit dem ersten Bestandteil (200) der Kunststoffabdeckung (100), in einer Ebene mit einer dem Betrachter zugewandten Oberfläche (231) der Folie (230) des ersten Bestandteils (200), abschließt.

12. Fahrzeugeinbaugerät, insbesondere Tachograph, mit einer Anzeigeabdeckung nach Anspruch 11.

## Claims

1. Method for producing a plastic cover (100) with a transparent section (210) in a multi-component injection-moulding process, comprising the steps of:
- applying an imprint (220) to at least one subregion of a transparent film (230); and
- moulding a first, transparent component (240) onto the side of the film (230) to which the imprint (220) has been applied, in an injection-moulding process, wherein the composite comprising the film (230) and the transparent component (240) forms a first element (200) of the plastic cover (100),
**characterized by**
moulding a second component (310) onto the first element (200) of the plastic cover (100), wherein the imprint (220) on the film (230) conceals evident structural means (250) and/or unsightly traces of production and wherein the second injection-moulding component (310) of the plastic cover (100) finishes flush with the first element (200) of the plastic cover (100), in a plane with a surface (231) of the film (230) of the first element (200) that is facing the viewer.

2. Method according to Claim 1, wherein the film (230) provided with an imprint (220) is brought into shape before the first, transparent component (240) is moulded onto the film (230).

3. Method according to either of the preceding claims, wherein the plastics material of the second injection-moulding component (310) is opaque.

4. Method according to one of the preceding claims, wherein the injection-moulding of the different components is performed in the reverse sequence, that is to say first the injection-moulding of the second component (310) and then the injection-moulding of the first component (240).

5. Method according to one of the preceding claims, wherein the injection-moulding of the different components is performed at the same time or at overlapping times.

6. Method according to one of the preceding claims, wherein the imprint (220) is provided in one or more bordering regions of the film (230) or in a frame-like manner in the bordering region of the film (230).

7. Method according to one of the preceding claims, wherein the application of the imprint (220) to the film (230) is performed in a screen-printing process.

8. Method according to one of the preceding claims, wherein the imprint (220) is multicoloured and/or comprises regions of contrasting colour.

9. Method according to one of the preceding claims, wherein the side (231) of the film (230) that is facing the viewer has a matt or glossy and/or antireflection-coated surface.

10. Method according to one of the preceding claims, wherein the film (230) has a coating on the side (231) facing the viewer or the side (232) facing away from the viewer or on both sides, but in particular on the side (231) facing the viewer.

11. Display cover of plastic comprising a first element (200) with a transparent section (210), which forms the display viewing region of the display cover, wherein the first element (200) has a transparent film (230) on the side facing the viewer and a transparent, first injection-moulding component (240) on the side facing away from the viewer, and wherein an imprint (220) with at least a view-inhibiting printed layer has been applied, at least in subregions, to the film (230) on the side (232) facing away from the viewer, so that evident structural means (250) and/or unsightly traces of production are concealed, and wherein this transparent film (230) forms a visual unit with the transparent injection-moulding component (240), and comprising a second element (300), which forms a structural supporting means, wherein the second element (300) forms a non-viewing region of the display cover, wherein a second injection-moulding component (310) of the plastic cover (100), moulded onto the first element (200), finishes flush with the first element (200) of the plastic cover (100), in a plane with a surface (231) of the film (230) of the first element (200) that is facing the viewer.

12. Built-in vehicle device, in particular tachograph, with a display cover according to Claim 11.

## Revendications

1. Procédé de fabrication d'une plaque protectrice en matière plastique (100) ayant une part transparente (210) dans un procédé de moulage par injection à plusieurs composantes, comprenant les étapes suivantes :
- application d'une impression (220) sur au moins une zone partielle d'un film transparent (230) ; et
- injection d'une première composante transparente (240) sur le côté du film (230) sur lequel est appliquée l'impression (220), dans un procédé de moulage par injection, le composé constitué du film (230) et de la composante transparente (240) formant un premier élément constitutif (200) de la plaque protectrice en matière plastique (100),
**caractérisé par**
l'injection d'une deuxième composante (310) sur le premier élément constitutif (200) de la plaque protectrice en matière plastique (100), l'impression (220) sur le film (230) masquant des moyens de construction (250) reconnaissables visuellement et/ou des traces de production gênant l'image visuelle et la deuxième composante (310) moulée par injection de la plaque protectrice en matière plastique (100) se terminant à fleur du premier élément constitutif (200) de la plaque protectrice en matière plastique (100), dans un plan comprenant une surface (231) du film (230) du premier élément constitutif (200) qui fait face à l'observateur.

2. Procédé selon la revendication 1, le film (230) pourvu d'une impression (220) étant mis en forme avant que la première composante transparente (240) soit injectée sur le film (230).

3. Procédé selon l'une des revendications précédentes, la matière plastique de la deuxième composante moulée par injection (310) étant opaque.

4. Procédé selon l'une des revendications précédentes, le moulage par injection des différentes composantes étant réalisé dans l'ordre inverse, c'est-à-dire tout d'abord le moulage par injection de la deuxième composante (310) et ensuite le moulage par injection de la première composante (240).

5. Procédé selon l'une des revendications précédentes, le moulage par injection des différentes composantes étant réalisé simultanément ou avec chevauchement dans le temps.

6. Procédé selon l'une des revendications précédentes, l'impression (220) étant réalisée dans une ou plusieurs zones de bordure du film (230) ou à la manière d'un cadre dans la zone de bordure du film (230).

7. Procédé selon l'une des revendications précédentes, l'application de l'impression (220) sur le film (230) étant réalisée par un procédé de sérigraphie.

8. Procédé selon l'une des revendications précédentes, l'impression (220) étant réalisée en plusieurs couleurs et/ou comprenant des zones à coloris alternés.

9. Procédé selon l'une des revendications précédentes, le côté (231) faisant face à l'observateur, du film (230) présentant une surface mate ou brillante et/ou antireflet.

10. Procédé selon l'une des revendications précédentes, le film (230) possédant un revêtement sur le côté (231) faisant face à l'observateur ou sur le côté (232) à l'opposé de l'observateur ou sur les deux côtés, mais notamment sur le côté (231) faisant face à l'observateur.

11. Plaque protectrice d'affichage en matière plastique, comprenant un premier élément constitutif (200) ayant une part transparente (210), lequel forme la partie visible de l'affichage de la plaque protectrice d'affichage, le premier élément constitutif (200) possédant un film (230) transparent sur le côté faisant face à l'observateur et une première composante de moulage par injection transparente (240) sur le côté à l'opposé de l'observateur, et une impression (220) étant appliquée au moins dans des zones partielles sur le film (230), sur le côté (232) à l'opposé de l'observateur, avec au moins une couche imprimée masquant la vue, de sorte que des moyens de construction (250) reconnaissables visuellement et/ou des traces de production gênant l'image visuelle sont masqués, et que ce film transparent (230) avec la composante de moulage par injection transparente (240) forme une unité visuelle, et comprenant un deuxième élément constitutif (300), lequel forme un moyen de soutien structurel, le deuxième élément constitutif (300) formant une zone sans visibilité de la plaque protectrice d'affichage, une deuxième composante de moulage par injection (310) de la plaque protectrice en matière plastique (100) injectée sur le premier élément constitutif (200) se terminant à fleur du premier élément constitutif (200) de la plaque protectrice en matière plastique (100), dans un plan comprenant une surface (231) du film (230) du premier élément constitutif (200) qui fait face à l'observateur.

12. Appareil intégré de véhicule, notamment tachygraphe, comprenant une plaque protectrice d'affichage selon la revendication 11.
